# EUROPÄISCHE PATENTANMELDUNG

(11) **EP 2 762 800 A1**
(43) Veröffentlichungstag der Anmeldung: **06.08.2014**
(21) Anmeldenummer: 14153227.5
(22) Anmeldetag: 30.01.2014
(51) Int. Cl.: F25B 15/02, F25B 15/04, F25B 15/06, F25B 35/02, F25B 37/00

(54) **Absorptionsanlage zum Heizen oder Kühlen eines Trägermediums**

(30) Priorität: 01.02.2013 EP 13153724
(71) Anmelder: BASF SE, 67056 Ludwigshafen (DE)
(72) Erfinder: Rumpf, Bernd, 68766 Hockenheim (DE); Pickenäcker, Karin, 68623 Lampertheim (DE)
(74) Vertreter: Hörschler, Wolfram Johannes

(57) **Zusammenfassung**

Die Erfindung betrifft eine Absorptionsanlage (100) zum Kühlen oder Heizen eines Trägermediums umfassend mindestens einen Desorber (10), in dem ein flüssiges Arbeitsstoff-Lösungsmittel-Gemisch (A1) in einen flüssigen lösungsmittelarmen Arbeitsstoff (A6, A7) und ein flüssiges arbeitsstoffarmes Lösungsmittel (A9) getrennt werden, mindestens einen Verdampfer (110, 120), in dem der flüssige lösungsmittelarme Arbeitsstoff (A8) verdampft wird, und mindestens einen Absorber (40), in dem der verdampfte lösungsmittelarme Arbeitsstoff (A13) durch das vom Desorber (10) bereitgestellte flüssige arbeitsstoffarme Lösungsmittel (A12) absorbiert wird, wobei ein oder mehrere der folgenden Merkmale erfüllt sind:
(a) im Desorber (10) ist mindestens ein wärmeeintragendes System (12, 130) zum Austreiben des Arbeitsstoffes (A4) aus dem flüssiges Arbeitsstoff-Lösungsmittel-Gemisch (A1) integriert,
(b) im Desorber (10) ist mindestens ein Kondensator (14) zum Kondensieren des lösungsmittelarmen Arbeitsstoffs (A5, A6) integriert, oder
(c) der Absorber (40) ist als Fallfilmapparat ausgestaltet.

Die Erfindung betrifft zudem die Verwendung einer derartigen Absorptionsanlage (100) zum Transformieren von Niedertemperaturwärme und ein Verfahren zum Kühlen oder Heizen eines Trägermediums in derartigen Absorptionsanlagen (100).

## Beschreibung

Die Erfindung betrifft eine Absorptionsanlage zum Kühlen oder Heizen eines Trägermediums mit mindestens einem Desorber, in dem ein flüssiges ArbeitsstoffLösungsmittel-Gemisch in einen flüssigen lösungsmittelarmen Arbeitsstoff und ein flüssiges arbeitsstoffarmes Lösungsmittel getrennt werden, mindestens einen Verdampfer, in dem der flüssige Arbeitsstoff verdampft wird, und mindestens einen Absorber, in dem der verdampfte lösungsmittelarme Arbeitsstoff durch das vom Desorber bereitgestellte flüssige arbeitsstoffarme Lösungsmittel absorbiert wird. Zudem betrifft die Erfindung ein Verfahren zum Kühlen oder Heizen eines Trägermediums sowie die Verwendung der Absorptionsanlage zum Transformieren von Niedertemperaturwärme.

Das Prinzip von Absorptionskreisläufen beruht im Gegensatz zu Kompressionsanlagen auf der temperaturbeeinflussten beziehungsweise thermischen Verdichtung eines Arbeitsstoffes, um eine Wärmeleistung oder eine Kälteleistung zu erzeugen. Im Allgemeinen werden dazu Arbeitsstoffpaare mit unterschiedlichen Siedepunkten eingesetzt, die in dem verwendeten Temperaturintervall in jedem Verhältnis ineinander löslich sind. So kann der Arbeitsstoff bei geringer Temperatur in dem Lösungsmittel absorbiert werden und bei höheren Temperaturen resorbiert werden. Damit bieten Absorptionskreisläufe prinzipiell hervorragende Möglichkeiten der rationellen Energienutzung beim Heizen und Kühlen sowie bei der Wärmerückgewinnung, wobei nur ein minimaler Einsatz hochwertiger elektrischer Energie zum Betrieb von Flüssigkeitspumpen erforderlich ist.

Besonders sinnvolle und zukunftsträchtige Anwendungen dieser Technik liegen in der Klimatisierung von Gebäuden mittels regenerativer Energien, wie der Solarenergie oder der Geothermie, und in der Nutzung beziehungsweise Rückgewinnung von Abwärme aus einer Vielzahl technischer Prozesse.

Generell wird zwischen zwei Kreislaufvarianten unterschieden:

### 1. Absorptionswärmepumpen (AWP) und Absorptionskältemaschinen (AKM)

Bei dieser Prozessvariante wird Wärme bei einem höheren Temperaturniveau (Antriebswärme) dem Kreisprozess zugeführt, bei einem mittleren Temperaturniveau Wärme abgegeben (Heizwärme) und Wärme bei einem tiefen Temperaturniveau aus der Umgebung aufgenommen (Abkühlung der Umgebung).

AWP und AKM unterscheiden sich nur durch die unterschiedlichen Temperaturniveaus, bei denen Wärme aus der Umgebung aufgenommen wird. Ziel der AWP ist die Erzeugung von Wärme, z. B. zur Raumheizung, während mit der AKM Kälteleistung bereitgestellt wird.

### 2. Absorptionswärmetransformator (AWT)

Bei dieser Prozessvariante wird eine bei einem mittleren Temperaturniveau anfallende Wärme in den Kreisprozess eingekoppelt, ein Teil davon auf ein höheres Temperaturniveau transformiert und als Nutzwärme abgegeben. Der andere Teil der zugeführten Wärme wird auf einem niedrigen Temperaturniveau an die Umgebung abgegeben.

Absorptionsprozesse zur Umwandlung von Wärme sind seit über 100 Jahren bekannt und technisch realisiert worden (beispielsweise beschrieben in Stephan, K., Chem.-Ing.-Tech., 60 (1998) 335-348*,* US 3,638,452, US 3,626,716 oder DE 101 003 95). In der Praxis haben Absorptionsanlagen jedoch aufgrund des gegenüber Kompressionsanlagen ungünstigeren thermodynamischen Wirkungsgrades und den beschränkten Arbeitstemperaturbereichen keine größere wirtschaftliche Bedeutung erlangt. Ein Vergleich mit der idealen Carnot-Grenzkurve für den Wirkungsgrad von Absorptionsanlagen zeigt jedoch, dass die Praxis dieser Anlagen noch recht weit von den theoretisch erreichbaren Werten entfernt ist. Gründe hierfür liegen in den hohen Anforderungen an die Arbeitsstoffpaare und die apparativen Komponenten. Beispielsweise sollte das Arbeitsstoffpaar einer Absorptionsanlage eine möglichst geringe Viskosität und Oberflächenspannung, eine geringe Korrosivität gegenüber eingesetzten Werkstoffen, Langzeitstabilität, einen geringen Dampfdruck des Lösungsmittels sowie eine möglichst hohe Aufnahmefähigkeit für den zu lösenden Arbeitsstoff bereitstellen. Zusätzlich sind der apparative und konstruktive Aufwand bei Absorptionsanlagen aufgrund der Anzahl der zu verschaltenden Apparate hoch.

Ein Ansatz zur Verbesserung bekannter Absorptionsanlagen betrifft den Arbeitstemperaturbereich. Aus DE 10 2004 056 484 A1 ist ein Verfahren zur absorptiven Kälteerzeugung bekannt, das einen größeren Arbeitstemperaturbereich durch eine Erhöhung der Kapazität im Absorber erreicht. Dazu wird ein Arbeitsstoffgemisch als reiche Lösung aus Lösung und Kältemittel, beispielsweise Wasser und Ammoniak, aus dem Absorber des Grundprozesses in zwei Teilströme aufgeteilt. Einer der Teilströme wird über Druckapparate, wie einen Mitteldruckdesorber, einen Resorber und einen Resorbatsammler, geführt, die zugunsten der Kompaktheit mit Zonen gleichen Drucks zusammengefasst sind.

Weitere Ansätze zu Verbesserung von Absorptionsanlagen basieren darauf, dass einzelne Elemente der Anlagen, insbesondere des Absorbers und des Desorbers, einfacher und kostengünstiger ausgestaltet sind. Aus DE 20 2008 011 174 U1 ist eine Anlage zum Heizen oder Kühlen mit einer Resorptionsverschaltung bekannt, die mindestens einen Absorber und mindestens einen Desorber bereitstellt. Dabei sind Absorber und Desorber als kompakte und kostengünstige Wärmeübertragungsapparate, wie Plattenwärmeübertrager, Spiralwärmeübertrager oder Membrankontaktoren, ausgeführt.

Bekannte Anlagen nutzen Abwärme im Bereich von einigen hundert Kilowatt. Nachteilig an derartigen Anlagen ist jedoch deren begrenzter Wirkungsgrad. Die Leistung des Prozesses ist dabei insbesondere durch die zur Absorption und zur Desorption eingesetzten Komponenten eingeschränkt. Zusätzlich wird eine große Anzahl von einzelnen Apparaten benötigt, was in hohen Investitionskosten und damit einer geringen Wirtschaftlichkeit der Anlage resultiert.

Aufgabe der Erfindung ist es, eine Absorptionsanlage mit einer geringen Anzahl von einzelnen zu verschaltenden Apparaten bereitzustellen, deren Wirkungsgrad im Vergleich zu bekannten Anlagen zumindest vergleichbar ist. Darüberhinaus soll die Absorptionsanlage einfach ausgestaltet sein, um die Investitionskosten und das Bauvolumen zu reduzieren. Zudem soll die Absorptionsanlage für einen Einsatz von neuartigen, umweltfreundlichen Arbeitsstoffpaaren geeignet sein.

Die Aufgabe wurde gelöst durch eine Absorptionsanlage zum Kühlen oder Heizen eines Trägermediums, umfassend folgende Komponenten:
- mindestens einen Desorber, in dem ein flüssiges Arbeitsstoff-Lösungsmittel-Gemisch in einen flüssigen lösungsmittelarmen Arbeitsstoff und ein flüssiges arbeitsstoffarmes Lösungsmittel getrennt werden,
- mindestens einen Verdampfer, in dem der flüssige lösungsmittelarme Arbeitsstoff verdampft wird, und
- mindestens einen Absorber, in dem der verdampfte lösungsmittelarme Arbeitsstoff durch das vom Desorber bereitgestellte flüssige arbeitsstoffarme Lösungsmittel absorbiert wird,
wobei ein oder mehrere der folgenden Merkmale erfüllt sind:
(a) im Desorber ist mindestens ein wärmeeintragendes System zum Austreiben des Arbeitsstoffes aus dem flüssigen Arbeitsstoff-Lösungsmittel-Gemisch integriert,
(b) im Desorber ist mindestens ein Kondensator zum Kondensieren des lösungsmittelarmen Arbeitsstoffs integriert, oder
(c) der Absorber ist als Fallfilmapparat ausgestaltet.

Gegenstand der Erfindung ist zudem ein Verfahren zum Kühlen oder Heizen eines Trägermediums in einer erfindungsgemäßen Absorptionsanlage mit folgenden Schritten:
- Trennen eines flüssigen Arbeitsstoff-Lösungsmittel-Gemisch in einen flüssigen lösungsmittelarmen Arbeitsstoff und ein flüssiges arbeitsstoffarmes Lösungsmittel in mindestens einem Desorber,
- Verdampfen des flüssigen lösungsmittelarmen Arbeitsstoffs in mindestens einem Verdampfer, und
- Absorbieren des verdampften lösungsmittelarmen Arbeitsstoffs durch das vom Desorber bereitgestellte flüssige arbeitsstoffarme Lösungsmittel in mindestens einem Absorber,
wobei ein oder mehrere der folgenden Merkmale erfüllt sind:
(aa) das Trennen des flüssigen Arbeitsstoff-Lösungsmittel-Gemisches erfolgt in einem Desorber, in dem mindestens ein wärmeeintragendes System zum Austreiben des Arbeitsstoffs aus dem flüssiges Arbeitsstoff-Lösungsmittel-Gemisch integriert ist,
(bb) das Trennen des flüssigen Arbeitsstoff-Lösungsmittel-Gemisches erfolgt in einem Desorber, in dem mindestens ein Kondensator zum Kondensieren des lösungsmittelarmen Arbeitsstoffs integriert ist, oder
(cc) das Absorbieren des verdampften lösungsmittelarmen Arbeitsstoffes erfolgt in einem als Fallfilmapparat ausgestalteten Absorber.

Üblicherweise werden zum Bereitstellen des flüssigen Arbeitsstoffs ein Austreiber, eine Rektifikationskolonne sowie ein Verflüssiger miteinander verschaltet. Durch die erfindungsgemäße Lösung, in der diese Komponenten teilweise oder vollständig im Desorber integriert sind, wird die Anzahl der einzeln ausgeführten Apparate reduziert. So kann das wärmeübertragende System zum Austreiben des Arbeitsstoffs, der Kondensator zum Kondensieren des lösungsmittelarmen Arbeitsstoffs oder eine Kombination dieser funktionalen Komponenten in den Desorber integriert werden. Zusätzlich ermöglicht eine derart integrierte Lösung, Druckverluste und damit Irreversibilitäten im Desorber zu minimieren. Die Ausgestaltung des Absorbers als Fallfilmapparat führt weiterhin zu einem besseren Wärmeübergang auf das Trägermedium und zeichnet sich zusätzlich durch geringe Druckverluste aus. Insgesamt stellt die erfindungsgemäße Lösung somit ein vollständig integriertes System für Absorptionsanlagen bereit, das die Anzahl der einzeln ausgeführten Apparate minimiert und den thermodynamischen Wirkungsgrad der Absorptionsanlage erhöht. Insbesondere ermöglicht die erfindungsgemäße Lösung, Niedertemperaturabwärme auf ein nutzbares Temperaturniveau zu transformieren und zu verwerten.

Im Allgemeinen werden Absorptionsanlagen mit einem Arbeitsstoffpaar enthaltend einen Arbeitsstoff A) und ein Lösungsmittel B) betrieben. Die Zusammensetzung des Gemisches bestimmt sich dabei maßgeblich nach den entsprechenden Siedetemperaturen und Dampfdrücken der Komponenten. So soll das Gemisch bei der jeweiligen Temperatur ein flüssiges Gemisch bilden. Die Komponenten sollen aber unterschiedliche Dampfdrücke aufweisen. Dabei kann der Arbeitsstoff Wasser, mindestens einen mehrwertigen Alkohol oder Ammoniak enthalten, und das Lösungsmittel kann eine ionische Flüssigkeit, Wasser, mindestens einen mehrwertigen Alkohol oder mindestens ein anorganisches Salz enthalten, wobei der mindestens eine mehrwertige Alkohol oder Wasser in dem Arbeitsstoff oder dem Lösungsmittel enthalten ist. Als mehrwertige Alkohole eignen sich zum Beispiel Ethylenglycol, Glycerin oder Isopropanol. Derartige Arbeitsstoff/Lösungsmittel-Gemische zum Betreiben der erfindungsgemäßen Absorptionsanlage sind zum Beispiel Ammoniak (NH₃)/Wasser (H₂O), Wasser (H₂O)/Lithiumbromid (LiBr), Ammoniak (NH₃)/ionische Flüssigkeit, Wasser (H₂O)/ionische Flüssigkeit, mehrwertiger Alkohol/ionische Flüssigkeit, Wasser/Glycerin und Wasser/Natriumhydroxid.

In einer bevorzugten Ausführungsform enthält das Arbeitsstoffpaar einen Arbeitsstoff und eine ionische Flüssigkeit. Ionische Flüssigkeiten eignen sich besonders als Lösungsmittel im Arbeitsstoffpaar, da sie einen vernachlässigbar kleinen Dampfdruck besitzen, wodurch beispielsweise die Stofftrennproblematiken, wie im Falle eines Ammoniak-Wasser Arbeitsstoffpaares, vermieden werden kann. Weiterhin können ionische Flüssigkeiten eingesetzt werden, die im Arbeitsbereich flüssig sind und somit keine auskristallisierenden Salze hinterlassen. Damit kann dem Lösungsmittel der gesamte Arbeitsstoff, beispielsweise Wasser, entzogen werden und zum Kühlen oder Heizen verwendet werden (hohe Ausgasungsbreite). Auch die Temperaturbeständigkeit, die verschwindend geringe Explosionsfähigkeit sowie die geringe Toxität von ionischen Flüssigkeiten stellen weitere Vorteile dar.

Ionische Flüssigkeiten im Sinne der vorliegenden Erfindung sind vorzugsweise Salze der allgemeinen Formel (I), (II) oder (III)

B1) [A]ₙ⁺[Y]ⁿ⁻ (I)

in der n für 1, 2, 3 oder 4 steht, [A]⁺ für ein quartäres Ammonium-Kation, ein Oxonium-Kation, ein Sulfonium-Kation oder ein Phosphonium-Kation und [Y]ⁿ⁻ für ein ein-, zwei-, drei- oder vierwertiges Anion steht;
B2) gemischte Salze der allgemeinen Formeln (II)

[A¹]+[A²]+[Y]²⁻ (IIa);

[A¹]+[A²]+[A³]⁺[Y]³⁻ (IIb);

oder

[A¹]+[A²]+[A³]+[A⁴]+[Y]⁴⁻ (IIc),

wobei [A¹]⁺, [A²]⁺, [A³]⁺ und [A⁴]⁺ unabhängig voneinander aus den für [A]⁺ genannten Gruppen ausgewählt sind und [Y]ⁿ⁻ die unter B1) genannte Bedeutung besitzt; oder
B3) gemischte Salze der allgemeinen Formeln (III)

[A¹]+[A²]+[A³]+[M¹]+[Y]⁴⁻ (IIIa);

[A¹]+[A²]+[M¹]+[M²]⁺[Y]⁴⁻ (IIIb);

[A¹]+[M¹]+[M²]+[M³]+[Y]⁴⁻ (IIIc);

[A¹]+[A²]+[M¹]⁺[Y]³⁻ (IIId);

[A¹]+[M¹]+[M²]+[Y]³⁻ (IIIe);

[A¹]+[M¹]⁺[Y]²⁻ (IIIf);

[A¹]+[A²]+[M⁴]²⁺[Y]⁴⁻ (IIIg);

[A¹]+[M¹]+[M⁴]²+[Y]⁴⁻ (IIIh);

[A¹]+[M⁵]³⁺[Y]⁴⁻ (IIIi);

oder

[A¹]+[M⁴]²+[Y]³⁻ (IIIj)

wobei [A¹]⁺, [A²]⁺ und [A³]⁺ unabhängig voneinander aus den für [A]⁺ genannten Gruppen ausgewählt sind, [Y]ⁿ⁻ die unter B1) genannte Bedeutung besitzt und [M¹]⁺, [M²]⁺, [M³]⁺ einwertige Metallkationen, [M⁴]²⁺ zweiwertige Metallkationen und [M⁵]³⁺ dreiwertige Metallkationen bedeuten, oder Gemische der Salze der allgemeinen Formel (I), (II) oder (III), wobei die ionischen Flüssigkeiten einen Schmelzpunkt von < 180°C besitzen. So können die ionischen Flüssigkeiten einen Schmelzpunkt ≤ 150°C, insbesondere ≤ 80°C, besitzen. Beispielsweise kann der Schmelzpunkt in einem Bereich von - 50°C bis 150°C, insbesondere in einem Bereich von - 20°C bis 120°C, liegen.

Bevorzugt sind ionische Flüssigkeiten, in denen das Kation [A]⁺ ein quartäres Ammonium-Kation ist, welches im Allgemeinen 1 bis 5, bevorzugt 1 bis 3 und besonders bevorzugt 1 bis 2 Stickstoffatome enthält. Derartige ionische Flüssigkeiten sind in WO 2005/113702 A1 beschrieben, die hiermit durch Verweis einbezogen sind. Geeignete ionische Flüssigkeiten für das Arbeitsstoffpaar im Rahmen der vorliegenden Erfindung sind zum Beispiel N-Ethyl-N-methylimidazoliumtetrafluoroborat, Ethylmethylimidazoliumtriflat, 2-Hydroxyethylammoniumformiat, Diethylmethylammoniummethansulfonat, Ethylmethyli-midazoliummethansulfonat oder Ethylmethylimidazoliumacetat.

In Kombination mit ionischen Flüssigkeiten sind bevorzugte Arbeitsstoffe organische oder anorganische Flüssigkeiten, deren Verdampfungsenthalpien ≥ 400 KJ/kg sind. Besonders bevorzugt sind Wasser, Ammoniak, Methanol oder fluorierte Chlorkohlenwasserstoffe, wie z.B. Freone, Frigen. Ganz besonders bevorzugt sind hierbei Arbeitsstoffe wie Wasser, Methanol oder Ammoniak, insbesondere Wasser oder Ammoniak.

Die erfindungsgemäße Absorptionsanlage kann mit Arbeitsstoffpaaren betrieben werden, die als Komponente A) mindestens 3 Gew.-%, bevorzugt mindestens 20 Gew.-%, insbesondere mindestens 30 Gew.-% Arbeitsstoff, bezogen auf das Gesamtgewicht des Arbeitsstoffpaares enthalten. Als Komponente B) können höchstens 97 Gew.-%, bevorzugt höchstens 80 Gew.-%, insbesondere höchstens 70 Gew.-% ionische Flüssigkeit, bezogen auf das Gesamtgewicht des Arbeitsstoffpaares enthalten sein.

In einer Ausführungsform sind Arbeitsstoffpaare bevorzugt, für die der Arbeitsstoff, etwa Wasser, und die ionische Flüssigkeit im Temperaturbereich von -20 bis 200°C, besonders bevorzugt von -5 bis 150°C, mischbar sind. In einer anderen Ausführungsform sind Arbeitsstoffpaare bevorzugt, für die der Arbeitsstoff, etwa Ammoniak, und die ionische Flüssigkeit im Temperaturbereich von -60 bis 100°C, besonders bevorzugt von - 40 bis 50 °C, mischbar sind.

In einer Ausführungsform der erfindungsgemäßen Absorptionsanlage ist der Desorber als Desorptionskolonne ausgestaltet. Dabei sind im Desorber mindestens ein wärmeeintragendes System zum Austreiben des Arbeitsstoffs und mindestens ein Kondensator zum Kondensieren des lösungsmittelarmen Arbeitsstoffs integriert. In einer bevorzugten Ausführungsvariante sind das wärmeeintragende System im Sumpfbereich der Desorptionskolonne und der Kondensator im Kopfbereich der Desorptionskolonne angeordnet.

In einer weiteren Ausführungsform der erfindungsgemäßen Absorptionsanlage ist das wärmeeintragende System im Desorber ausgestaltet, Wärme, insbesondere Abwärme aus Produktionsprozessen, in den Desorber einzutragen. Das wärmeeintragende System kann mindestens einen Füllkörper in Kombination mit mindestens einem Wärmeübertrager umfassen. Der Wärmeübertrager kann dabei als U-Rohrbündel, Robertverdampfer, Fieldrohre oder Plattenapparate im Desorber, insbesondere im Sumpfbereich der Desoptionskolonne, ausgeführt sein. Zusätzliche Rippen oder Lamellen in dem wärmeübertragenden System können die wärmeübertragenden Flächen vergrößern und somit einen verbesserten Wärmeübertrag bereitstellen. Weiterhin denkbar ist ein Besintern der wärmeübertragenden Flächen, um die Anzahl der für die Blasenbildung entscheidenden Keimstellen zu erhöhen. Der Siedevorgang beginnt an diesen Keimstellen, welche zum Beispiel kleine Oberflächenrauhigkeiten des Wandmaterials sind. Mit steigender Übertemperatur nimmt die Intensität der Blasenbildung zu, und es entstehen immer mehr Stellen, an denen sich Siedeblasen bilden.

In einer alternativen Ausführungsform der erfindungsgemäßen Absorptionsanlage ist das wärmeeintragende System als Rohrbündelapparat ausgestaltet, auf den das Arbeitsstoff-Lösungsmittel-Gemisch aufgegeben wird. Der Rohrbündelapparat umfasst dabei vorzugsweise ein Bündel aus senkrechten Rohren, auf deren Innenseite das Arbeitsstoff-Lösungsmittel-Gemisch aufgegeben wird. So kann das wärmeeintragende System Wärme, insbesondere Abwärme aus Produktionsprozessen, in den Mantelraum des Rohrbündelapparates eintragen.

Zusätzlich kann der Desorber mindestens ein Verteilersystem umfassen, das das Arbeitsstoff-Lösungsmittel-Gemisch auf einen Füllkörper oder den Rohrbündelapparat gibt. Vorzugsweise sind der Zulauf und das Verteilersystem für das Arbeitsstoff-Lösungsmittel-Gemisch im mittleren Bereich des als Desorptionskolonne ausgestalteten Desorbers angeordnet. So wird das Arbeitsstoff-Lösungsmittel-Gemisch zunächst über den Füllkörper geleitet, bevor es zu dem wärmeeintragenden System im Sumpfbereich der Desorptionskolonne gelangt. Hierbei kann der Füllkörper beispielsweise eine strukturierte oder eine unstrukturierte Packung, eine Schüttung oder eine Kombination von Böden umfassen.

In einer weiteren Ausführungsform der erfindungsgemäßen Absorptionsanlage ist der im Desorber integrierte Kondensator oberhalb eines Fangbodens angeordnet. Insbesondere in der Ausgestaltung als Desorptionskolonne ist der Kondensator im Kopfbereich der Desorptionskolonne angeordnet. Auch der Kondensator kann als Rohrbündelapparat oder Plattenapparat ausgestaltet sein, der von einem Kühlmittel, zum Beispiel Kühlwasser, durchflossen wird. Bei Plattenapparaten ist es zur vollständigen Integration des Kondensators in den Desorber bevorzugt, das Kühlmittel innerhalb der Platten zu führen und den Arbeitsstoff im Mantelraum um die Platten zu kondensieren. In der alternativen Ausführung als Rohrbündelapparat ist es bevorzugt, das Kühlmittel im Mantelraum des Rohrbündels zu führen und den Arbeitsstoff auf der Innenseite der Rohre zu kondensieren. Zusätzliche Rippen oder Lamellen innerhalb der Rohre können die wärmeübertragenden Flächen vergrößern und somit einen verbesserten Wärmeübertrag bereitstellen. Zusätzlich oder alternativ können Turbulenzgeneratoren in die Rohre des Rohrbündels eingebracht werden, die künstliche Strömungsturbulenzen erzeugen und so den Wärmeübertrag verbessern. Dazu eignen sich zum Beispiel gewundene Bänder (twisted tape) oder Turbulatoren (hiTRAN-Elemente).

Zwischen dem Zulauf für das Arbeitsstoff-Lösungsmittel-Gemisch und dem Kondensator ist vorzugsweise ein Fangboden angeordnet, der abschnittsweise durchgängige Böden und Öffnungen umfasst. Die Öffnungen können dabei als Kamine oder Ventile ausgestaltet sein. So kann der ausgetriebene lösungsmittelarme Arbeitsstoff durch die Öffnungen im Gegenstrom zum Kondensat in den Kondensator strömen und dort verflüssigt werden. Der verflüssigte lösungsmittelarme Arbeitsstoff kann dann auf dem Fangboden gesammelt und aus dem Desorber ausgetragen werden.

In einer bevorzugten Ausführungsform ist der Absorber als Rohrbündelapparat mit einem Bündel senkrecht angeordneter Rohre ausgestaltet. Weiterhin kann der Absorber im Kopfbereich ein Verteilersystem umfassen, das das flüssige arbeitsstoffarme Lösungsmittel aus dem Desorber auf dem Rohrbündel, vorzugsweise einer Innenseite der Rohre, verteilt. Im Sumpfbereich des Absorbers wird vorzugsweise der verdampfte lösungsmittelarme Arbeitsstoff aus dem Verdampfer durch ein weiteres Verteilersystem auf das Rohrbündel, insbesondere auf eine Innenseite der Rohre, aufgegeben. So kann das aus dem Desorber bereitgestellte flüssige arbeitsstoffarme Lösungsmittel als dünner Film auf die Innenseite der Rohre verteilt werden und unter dem Einfluss der Schwerkraft herabfließen. Dadurch erhöht sich zum einen das Absorptionsvermögen des flüssigen arbeitsstoffarmen Lösungsmittels und zum andern der Wärmeübertrag auf den Trägerstoff, der sich vorzugsweise im Mantelraum des Rohrbündels befindet.

In einer weiteren Ausführungsform ist dem Desorber und/oder dem Absorber mindestens ein Economiser zugeordnet, in dem ein zulaufender Strom gegen einen ablaufenden Strom geheizt oder gekühlt wird. Der Economiser stellt dabei einen Wärmeübertrager dar, der prozessinterne Wärme nutzt, um einen zulaufenden Strom gegen einen ablaufenden zu heizen oder zu kühlen. Der Wärmeübertrager kann hierbei als Rohrbündelapparat oder als Plattenapparat ausgestaltet sein. Beispielsweise kann das aus dem Desorber ablaufende arbeitsstoffarme Lösungsmittel gegen das dem Desorber zulaufenden Arbeitsstoff-Lösungsmittel-Gemisch gekühlt werden. In einer anderen Variante kann der Economiser mit dem wärmeeintragenden System gekoppelt werden, um das dem Desorber zulaufenden Arbeitsstoff-Lösungsmittel-Gemisch zu heizen. In einer weiteren Variante kann der Economiser in den Absorber integriert sein, wobei das zulaufende arbeitsstoffarme Lösungsmittel gegen das ablaufende ArbeitsstoffLösungsmittel-Gemisch gekühlt wird.

In einer weiteren Ausführungsform ist der Verdampfer zum Verdampfen des flüssigen lösungsmittelarmen Arbeitsstoffes als separater Apparat ausgestaltet oder im Absorber integriert. Separate Verdampfer sind dem Fachmann hinlänglich bekannt. Der im Absorber integrierte Verdampfer kann als Rohrbündelapparat ausgestaltet sein, der an das wärmeeintragende System gekoppelt sein kann. Dazu kann der flüssige lösungsmittelarme Arbeitsstoff aus dem Desorber beispielsweise auf die Innenseite der Rohre aufgegeben werden und der Mantelraum des Rohrbündels von einem wärmetragenden Medium, insbesondere Abwärme aus Produktionsprozessen, durchströmt werden. Zusätzliche Rippen oder Lamellen innerhalb der Rohre können die wärmeübertragenden Flächen vergrößern und somit einen verbesserten Wärmeübertrag bereitstellen. Weiterhin denkbar ist ein Besintern der wärmeübertragenden Flächen, um die Anzahl der für die Blasenbildung entscheidenden Keimstellen zu erhöhen. Zusätzlich oder alternativ können Turbulenzgeneratoren in die Rohre des Rohrbündels eingebracht werden, die künstliche Strömungsturbulenzen erzeugen und so den Wärmeübertrag verbessern. Dazu eignen sich zum Beispiel gewundene Bänder (Twisted tape) oder Turbulatoren (hiTRAN-Elemente).

Ist der Verdampfer im Absorber integriert, kann mindestens ein Fangboden mit Öffnungen zwischen dem integrierten Verdampfer und dem Rohrbündel zur Absorption angeordnet sein, um das Arbeitsstoff-Lösungsmittel-Gemisch zu sammeln und zum Desorber auszutragen. Der Fangboden umfasst dazu abschnittsweise durchgängige Böden und Öffnungen, die als Kamine oder Ventile ausgestaltet sein können. So kann der verdampfte lösungsmittelarme Arbeitsstoff durch die Öffnungen in das Rohrbündel zur Absorption strömen. Das verflüssigte Arbeitsstoff-Lösungsmittel-Gemisch dagegen kann auf den abschnittsweise durchgängigen Böden des Fangbodens gesammelt werden, aus dem Absorber ausgetragen werden und dem Desorber zugeführt werden.

In einer weiteren Ausführungsform ist der Absorber mit mindestens einem weiteren Absorber verschaltet, insbesondere kann der weitere Absorber nachgeschaltet sein. Dabei wird der weitere Absorber bei einem höheren Druck betrieben als der Absorber. Dazu werden dem weiteren Absorber, der ebenfalls mit einem Economiser ausgerüstet sein kann, das arbeitsstoffarme Lösungsmittel aus dem Absorber, bevorzugt dem Economiser des Absorbers, und ein Anteil des lösungsmittelarmen Arbeitsstoffes, beispielsweise ein Anteil des nach dem Durchgang des Absorbers nicht absorbierten lösungsmittelarmen Arbeitsstoffes, zugeführt. Das Arbeitsstoff-Lösungsmittel-Gemisch aus dem weiteren Absorber wird dem Absorber zur weiteren Absorption von lösungsmittelarmem Arbeitsstoff zugeführt. Der weitere Absorber kann ebenfalls als Fallfilmapparat ausgestaltet sein. Dabei verdampft der rohrseitig beim Druck p1 betriebene Absorber mantelseitig den lösungsmittelarmem Arbeitsstoff beim Druck p₂. Dieser wird dem rohrseitig beim Druck p₂ betriebenen weiteren Absorber zugeführt und absorbiert. Durch die mehrstufige Ausführung der Absorption kann der Wirkungsgrad der Absorptionsanlage erhöht werden. Insbesondere kann dadurch Abwärme bei tiefen Temperaturen in Nutzwärme transformiert werden.

In der erfindungsgemäßen Absorptionsanlage entsteht eine Kälteleistung oder eine Wärmeleistung zum Kühlen oder Heizen eines Trägermediums. Die Wärmeleistung entsteht vorzugsweise im Mantelraum eines als Fallfilmapparat ausgestalteten Absorbers. Beim Heizen kann das Trägermedium zum Beispiel Wasser oder Thermalöle umfassen. Hierbei wird durch das wärmeeintragende System Wärme, insbesondere Abwärme aus zum Beispiel Produktionsprozessen, in die Absorptionsanlage eingetragen. Das Trägermedium kann durch die im Absorber freiwerdende Wärme in Heizdampf transformiert werden, der wiederum in einem Wärmeverbraucherkreis, beispielsweise in Produktionsprozessen, genutzt werden kann.

Beim Kühlen kann das Trägermedium zum Beispiel Wasser Kühlsole (Salz-Wasser-Lösungen), Alkohol-Wasser-Lösungen oder Thermalöle umfassen. Hierbei wird die im Absorber freiwerdende Wärme abgeführt und stattdessen das Trägermedium zum Wärmeeintrag in die Absorptionsanlage genutzt. Dadurch wird das Trägermedium gekühlt, was wiederum in einem Kälteverbraucherkreis, beispielsweise einer Klimaanlagen, genutzt werden kann.

Gegenstand der Erfindung ist zudem die Verwendung der vorstehend beschriebenen Absorptionsanlage zum Transformieren von Niedertemperaturwärme. Niedertemperaturwärme beschreibt dabei Abwärme aus Produktionsprozessen mit einem Temperaturniveau, das nicht im Arbeitstemperaturbereich bekannter Absorptionsanlagen liegt, um auf ein nutzbares Temperaturniveau transformiert zu werden. Die erfindungsgemäße Absorptionsanlage stellt dagegen einen Arbeitstemperaturbereich von 1 bis 100 MW, bevorzugt von 10 bis 50 MW, bereit, womit Abwärme im Bereich von 80 bis 120 °C in nutzbare Wärme transformiert werden kann.

Ausführungsbeispiele der Erfindung sind in den Figuren dargestellt und sind in der nachfolgenden Beschreibung näher erläutert. Es zeigen:
- Figur 1: einen Desorber mit integriertem Verdampfer und integriertem Kondensator,
- Figur 2a: eine Ausführungsform eines als Fallfilmabsorber ausgestalteten Absorbers,
- Figur 2b: eine weitere Ausführungsform eines als Fallfilmabsorber ausgestalteten Absorbers,
- Figur 3: ein Ausführungsbeispiel der erfindungsgemäßen Absorptionsanlage mit einem Desorber gemäß Figur 1 und einem Absorber gemäß Figur 2,
- Figur 4: ein weiteres Ausführungsbeispiel der erfindungsgemäßen Absorptionsanlage mit einem Desorber gemäß Figur 1 und einem Absorber, in den der Verdampfer integriert ist,
- Figur 5: ein weiteres Ausführungsbeispiel der erfindungsgemäßen Absorptionsanlage mit einem Desorber, in den ein Rohrbündelapparat als Verdampfer integriert ist, und einem Absorber, und
- Figur 6: ein weiteres Ausführungsbeispiel der erfindungsgemäßen Absorptionsanlage mit einem Desorber gemäß Figur 1 und einer zweistufigen Absorption.

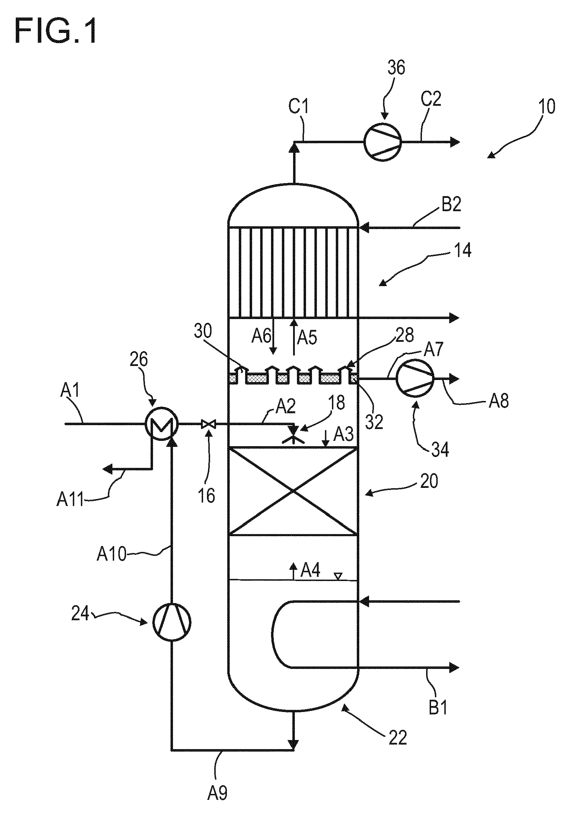

Figur 1 zeigt das Verfahrenskonzept eines Desorber 10 mit integriertem Verdampfer 12 und integriertem Kondensator 14.

Ein Gemisch A1, enthaltend ein arbeitsstoffreiches Lösungsmittel wird in einem Drosselventil 16 auf Desorptionsdruck entspannt und einem als Desorptionskolonne ausgestalteten Desorber 10 zugeführt. Über ein Verteilersystem 18 wird das entspannte Arbeitsstoff-Lösungsmittel-Gemisch auf eine Packung 20 aufgegeben, wodurch ein intensiver Wärme- und Stoffaustausch gewährleistet wird. In anderen Ausführungsformen kann statt einer Packung auch eine Schüttung (z. B. aus Pallringen), eine Gewebepackung oder eine Konfiguration mit Böden eingesetzt werden.

Im Sumpf 22 der Desorptionskolonne 10 wird Abwärme B1 aus mindestens einem Produktionsprozess eingetragen und dadurch der Arbeitsstoff verdampft. Am Sumpf 22 der Desorptionskolonne 10 wird das an Arbeitsstoff verarmte Lösungsmittel A9 mittels einer Pumpe 24 ausgetragen und gegebenenfalls gegen das zulaufende ArbeitsstoffLösungsmittel-Gemisch A1 wärmeintegriert abgekühlt. Der Economiser 26 kann dabei beispielsweise als Rohrbündelapparat oder als Plattenapparat ausgeführt werden.

In der Ausführungsform gemäß Figur 1 wird als Wärmeübertrager 12 für den Eintrag der Abwärme B1 ein in den Sumpfbereich der Desorptionskolonne 10 integriertes U-Rohrbündel genutzt. In anderen Ausführungsformen können beispielsweise Robertverdampfer oder Fieldrohre eingesetzt werden. Denkbar sind auch Plattenapparate. Zur Vergrößerung der wärmeübertragenden Flächen können die Rohre oder die Platten mit weiteren Elementen, wie Rippen oder Lamellen, ausgestattet sein. Zusätzlich können die wärmeübertragenden Flächen besintert sein, um die Anzahl der für die Blasenbildung entscheidenden Keimstellen zu erhöhen.

Ein lösungsmittelarmer Arbeitsstoff A4 wird im Gegenstrom zum ArbeitsstoffLösungsmittel-Gemisch A3 aus dem Verteilersystem 18 geführt. Oberhalb des Zulaufes 18 ist ein Fangboden 28 angeordnet. Der lösungsmittelarme Arbeitsstoff A4 strömt durch Ventile oder Kamine 30 eines Bodens 32 und wird an einem in die Kolonne integrierten Kondensator 14 im Gegenstrom A5 zum Kondensat A6 niedergeschlagen. Dazu wird der Kondensator 14 von einem Kältemittel B2 durchströmt. Das Kondensat A6 wird mit Hilfe des Fangbodens 28 gesammelt und über eine Pumpe 34 ausgetragen. Neben der in Figur 1 gezeigten Ausführungsform kann der Kondensator auch in einem außerhalb der Desorptionskolonne 10 vorhandenen Apparat ausgeführt sein.

Als Kondensator 14 sind beispielsweise Plattenapparate, aber auch herkömmliche Rohrbündelapparate denkbar. Im ersten Fall wird bevorzugt um die Platten kondensiert und das Kühlmedium (z. B. Kühlwasser) in den Platten geführt. Im letzteren Fall ist es für die vollständige Integration des Kondensators 14 in die Desorptionskolonne 10 erforderlich, in den Rohren zu kondensieren. Hierbei kann der Wärmeübergang durch Einbauten, wie hiTRAN-Elemente oder twisted tapes, in den Rohren verbessert werden.

Im Kopfbereich der Destillationskolonne 10 ist ein Abzug 36 vorgesehen, der insbesondere beim Starten des Prozesses überflüssige Gase aus dem Inneren der Destillationskolonne abführt.

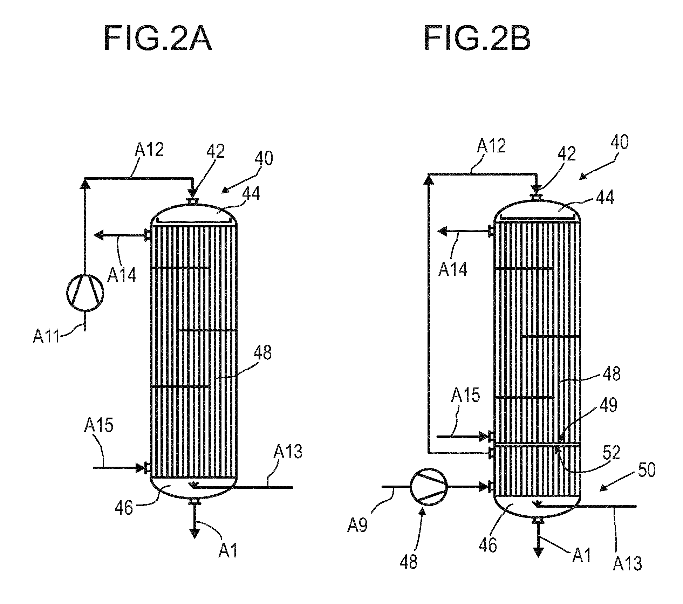

Figur 2a zeigt das Apparatekonzept eines als Fallfilmabsorber ausgestalteten Absorbers 40.

Der Absorber 40 ist dabei als Rohrbündelapparat 48 ausgestaltet, dessen Rohre senkrecht ausgerichtet ist, so dass ein Film des arbeitsstoffarme Lösungsmittels A11 unter Einfluss der Schwerkraft entlang der Rohre fließen kann. Das arbeitsstoffarme Lösungsmittel A11 wird auf den Kopf 42 des Absorbers 40 aufgegeben und mittels eines Verteilers 44 auf die Innenseite der Rohre verteilt, wo es als Film nach unten strömt. Der dampfförmige Arbeitsstoff A13 wird am Boden 46 des Absorbers 40 aufgegeben und im Gegenstrom zum arbeitsstoffarmen Lösungsmittel A11 absorbiert. Durch den an den Innenseiten der Rohre herabströmenden Film wird einerseits eine große Oberfläche und damit ein intensiver Wärme- und Stoffaustausch sichergestellt. Andererseits bewirkt das Verteilersystem 44 eine gute Benetzung der Rohrwände mit dem arbeitsstoffarmen Lösungsmittel A11.

Die bei der Absorption entstehende Nutzwärme kann beispielsweise zur Erzeugung von Heizdampf im Mantelraum des Rohrbündelapparates 48 eingesetzt werden. Dazu wird dem Absorber Wasser A15 zugeführt und durch die Wärme im Mantelraum des Rohrbündelapparates 48 verdampft. Der entstandene Heizdampf A14 kann direkt zur Beheizung eines Produktionsprozesses eingesetzt werden. Alternativ ist auch die Einspeisung in Dampfnetze denkbar. Weiterhin ist es auch denkbar, Flüssigkeiten, wie Wärmeträgeröle, mit der Nutzwärme aufzuheizen.

Figur 2b zeigt ein weiteres Apparatekonzept eines als Fallfilmabsorber ausgestalteten Absorbers 40.

In dieser Ausführungsvariante ist im Unterschied zu der in Figur 2a gezeigten ein Economiser 50 in den Absorber 40 integriert. Hierbei ist im Sumpfbereich 49 des Absorbers 40 der Economiser 50 angebracht. Im Economiser 50 wird das aus dem Absorber 40 ablaufende Arbeitsstoff-Lösungsmittel-Gemisch A1 überhitzt und das arbeitsstoffarme Lösungsmittel A16 abgekühlt.

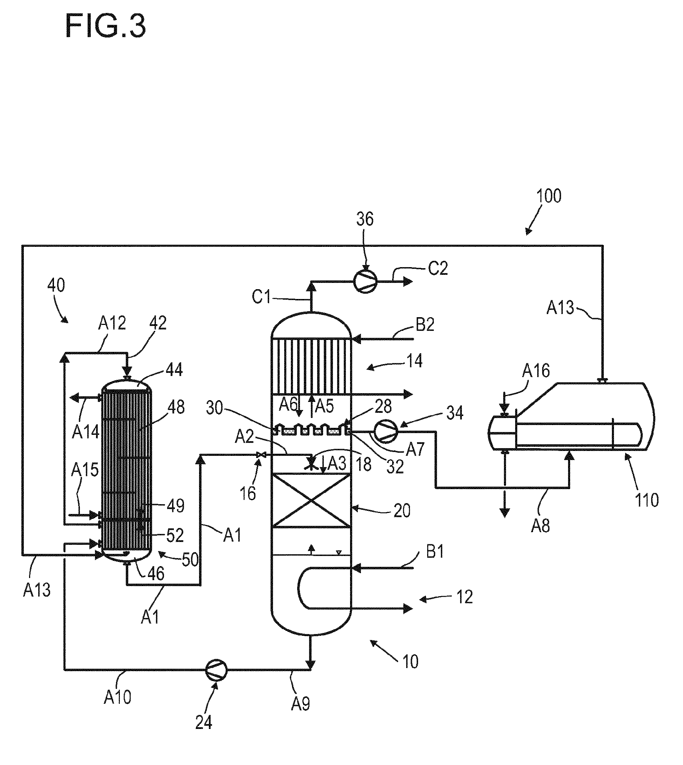

Figur 3 zeigt ein Ausführungsbeispiel der erfindungsgemäßen Absorptionsanlage 100 mit einem Desorber 10, wie in Figur 1 gezeigt, und einem Absorber 40, wie in Figur 2 gezeigt.

Der flüssige lösungsmittelarme Arbeitsstoff A7, der über den Fangboden 28 aus dem Desorptionskolonne 10 ausgetragen wird, wird mittels der Pumpe 34 einem Verdampfer 110 zugeführt und durch Zufuhr eines Teils der Abwärme A16 verdampft. Der entstehende Dampf des lösungsmittelarmen Arbeitsstoffes A13 wird dem Absorber 40 zugeführt und zumindest teilweise im arbeitsstoffarmen Lösungsmittel A10 absorbiert. Das Arbeitsstoff-Lösungsmittel-Gemisch A1 verlässt den Absorber 40 im Sumpfbereich 49 und wird der Desorptionskolonne 10 zugeführt, wo es unter Zufuhr von Abwärme B1 vom Arbeitsstoff befreit wird. Die Wärmeintegration zwischen dem beladenen und unbeladenem Lösungsmittel kann dabei gemäß der beiden in Figur 2a und 2b gezeigten Schaltungen erfolgen.

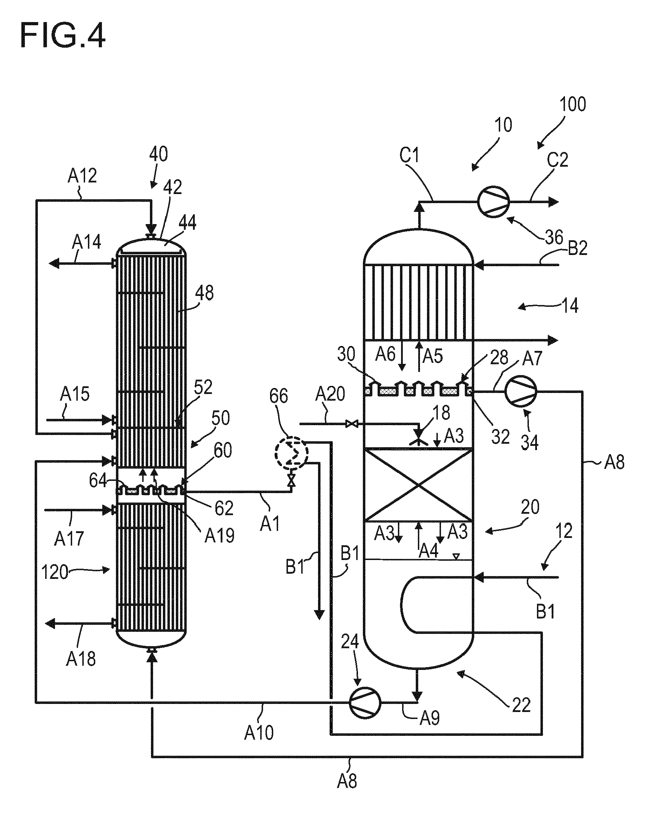

Figur 4 zeigt ein weiteres Ausführungsbeispiel der erfindungsgemäßen Absorptionsanlage 100 mit einem Desorber 10 gemäß Figur 1 und einem Absorber 40, wobei im Absorber 40 ein Verdampfer 120 integriert ist.

In dieser Ausführungsform der Absorptionsanlage 100 wird der Verdampfer 110 aus Figur 3 als Rohrbündelapparat 120 in den Absorber 40 integriert. Dazu wird der flüssige Arbeitsstoff A7 auf die Innenseite der Rohre aufgegeben, während ein die Abwärme tragendes Medium A17 im Mantelraum strömt. Der verdampfte lösungsmittelarme Arbeitsstoff A19 wird über die Öffnungen 64 eines Fangbodens 60 geleitet und gelangt so in den Absorber 40. Das arbeitsstoffreiche Lösungsmittel A1 wird dagegen mittels der abschnittsweise durchgängigen Böden 62 des Fangbodens 60 gesammelt und zum Desorber 10 ausgetragen. Um den Arbeitsstoff A8 im Verdampfer 120 möglichst vollständig zu verdampfen, können die Rohre des Verdampfers 120 mit Turbulenzgeneratoren, wie Twisted Tapes oder HiTran-Elementen, ausgestattet werden. Ebenso ist es denkbar, Rippen oder Lamellen innerhalb der Rohre einzusetzen. Zusätzlich oder alternativ können die Rohre zur Verbesserung des Wärmeüberganges auf der Innenseite besintert werden.

Zusätzlich kann das Arbeitsstoff-Lösungsmittel-Gemisch A1 aus dem Absorber 40 mit weiteren an das wärmeeintragende System gekoppelten Mitteln 66 gekühlt werden, bevor das Arbeitsstoff-Lösungsmittel-Gemisch A1 in den Desorber 10 einritt. Die Mittel 66 können beispielsweise von dem wärmetragenden Strom B2 oder einem weiteren wärmetragenden Strom durchströmt werden.

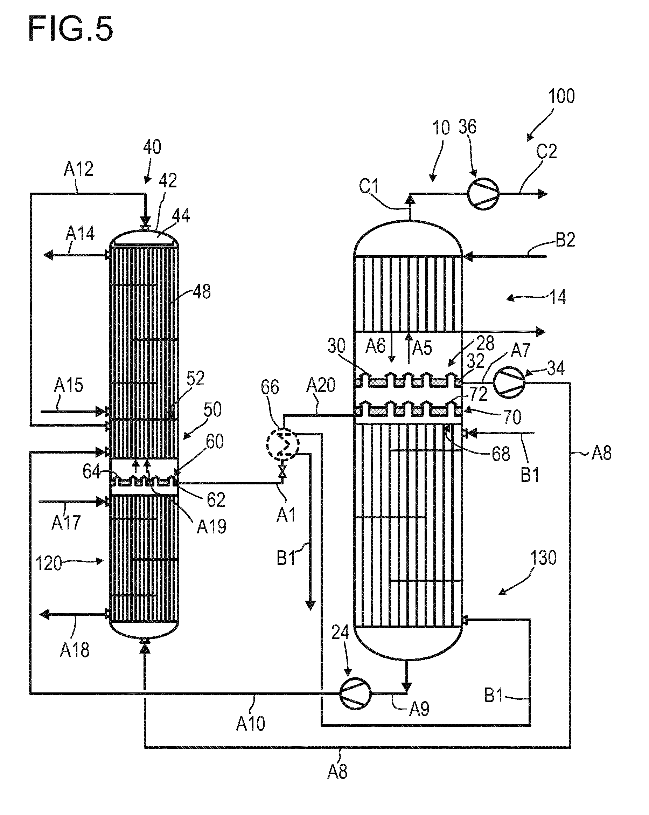

Figur 5 zeigt ein weiteres Ausführungsbeispiel der erfindungsgemäßen Absorptionsanlage 100 mit Desorber 10 und Absorber 40, wobei der Verdampfer des Desorbers 40 als Rohrbündelapparat ausgestaltet ist.

In dieser Ausführungsform der Absorptionsanlage 100 wird der Verdampfer 12 des Desorbers 10 ebenfalls als Rohrbündelapparat 130 ausgeführt. Dazu wird das Arbeitsstoff-Lösungsmittel-Gemisch A1, A20 auf den Kopf 68 eines relativ zur Erde senkrecht ausgerichteten Rohrbündels 70 aufgegeben, sodass das Gemisch A1, A20 auf die Innenseite der Rohre verteilt wir und nach unten strömt. Der desorbierte Arbeitsstoff A4 strömt im Gegenstrom zum Lösungsmittel A3 zum Fangboden 70, wo es beispielsweise durch Kamine oder Ventile 72, 32 den Desorber 10 verlässt. Über den darüber angebrachten Fangboden 30 wird der kondensierte Arbeitsstoff A6 mit Hilfe der Pumpe 34 ausgetragen.

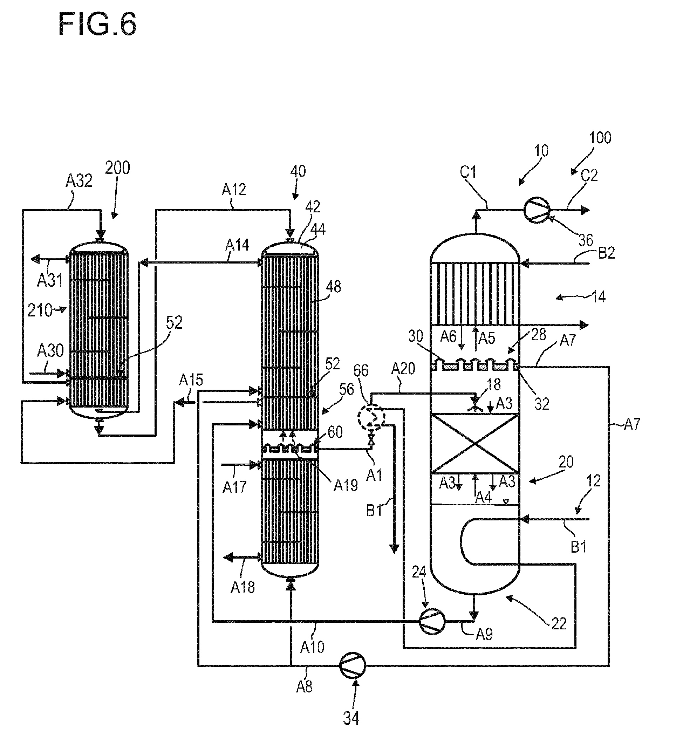

Figur 6 zeigt ein weiteres Ausführungsbeispiel der erfindungsgemäßen Absorptionsanlage 100 mit einem Desorber 10 gemäß Figur 1 und einer zweistufigen Absorption 40, 200.

In dieser Ausführungsform der Absorptionsanlage 100 wird die Absorption mehrstufig druckgestuft durchgeführt, um Abwärme bei tieferen Temperaturen zu nutzen. Dazu werden zwei als Fallfilmapparate ausgestaltete Absorber 40, 200 eingesetzt, wobei der weitere Absorber 200 bei einem Druck p₂ betrieben wird, der größer dem Druck p₁ des Absorbers 40 ist. Der weitere Absorber 200 ist hierbei ebenfalls mit einem Economiser 220 ausgerüstet. Dem weiteren Absorber 200 werden das arbeitsstoffarme Lösungsmittel A15 aus dem Economiser 50 des Absorbers 40, und ein Anteil des lösungsmittelarmen Arbeitsstoffes A14 zugeführt. Das Arbeitsstoff-Lösungsmittel-Gemisch A12 aus dem weiteren Absorber 200 wird dem Absorber 40 zur weiteren Absorption von lösungsmittelarmem Arbeitsstoff zugeführt. Dabei verdampft der rohrseitig beim Druck p₁ betriebene Absorber 40 mantelseitig den lösungsmittelarmem Arbeitsstoff beim Druck p₂. Dieser wird dem rohrseitig beim Druck p₂ betriebenen Absorber 200 zugeführt und absorbiert. Dabei wird Nutzwärme frei und kann z. B. zur Erzeugung von Heizdampf eingesetzt werden. Durch diese mehrstufige Ausführung der Absorption kann der Wirkungsgrad der Absorptionsanlage erhöht werden. Insbesondere kann dadurch Abwärme bei tiefen Temperaturen in Nutzwärme transformiert werden.

## Patentansprüche

1. Absorptionsanlage (100) zum Kühlen oder Heizen eines Trägermediums umfassend mindestens einen Desorber (10), in dem ein flüssiges ArbeitsstoffLösungsmittel-Gemisch (A1) in einen flüssigen lösungsmittelarmen Arbeitsstoff (A6, A7) und ein flüssiges arbeitsstoffarmes Lösungsmittel (A9) getrennt werden, mindestens einen Verdampfer (110, 120), in dem der flüssige lösungsmittelarme Arbeitsstoff (A8) verdampft wird, und mindestens einen Absorber (40), in dem der verdampfte lösungsmittelarme Arbeitsstoff (A13) durch das vom Desorber (10) bereitgestellte flüssige arbeitsstoffarme Lösungsmittel (A12) absorbiert wird, **dadurch gekennzeichnet, dass** ein oder mehrere der folgenden Merkmale erfüllt sind:
(a) im Desorber (10) ist mindestens ein wärmeeintragendes System (12, 130) zum Austreiben des Arbeitsstoffes (A4) aus dem flüssiges ArbeitsstoffLösungsmittel-Gemisch (A1) integriert,
(b) im Desorber (10) ist mindestens ein Kondensator (14) zum Kondensieren des lösungsmittelarmen Arbeitsstoffs (A5, A6) integriert,
(c) der Absorber (40) ist als Fallfilmapparat ausgestaltet.

2. Absorptionsanlage (100) gemäß Anspruch 1, **dadurch gekennzeichnet, dass** der Arbeitsstoff Wasser, mindestens einen mehrwertigen Alkohol oder Ammoniak enthält, und das Lösungsmittel eine ionische Flüssigkeit, Wasser, mindestens einen mehrwertigen Alkohol oder mindestens ein anorganisches Salz enthält, wobei der mindestens eine mehrwertige Alkohol oder Wasser in dem Arbeitsstoff oder dem Lösungsmittel enthalten ist.

3. Absorptionsanlage (100) gemäß Anspruch 1 oder 2, **dadurch gekennzeichnet, dass** der Desorber (10) als Desorptionskolonne ausgestaltet ist, in die mindestens ein wärmeeintragendes System (12, 130) zum Austreiben des Arbeitsstoffs (A4) und mindestens ein Kondensator zum Kondensieren des Arbeitsstoffs (A5, A6) integriert ist.

4. Absorptionsanlage (100) gemäß einem der Ansprüche 1 bis 3, **dadurch gekennzeichnet, dass** das wärmeeintragende System (12, 130) mindestens einen Füllkörper (20) in Kombination mit mindestens einem Wärmeübertrager (12) oder mindestens einen Rohrbündelapparat (130) umfasst.

5. Absorptionsanlage (100) gemäß Anspruch 4, **dadurch gekennzeichnet, dass** der Desorber (10) mindestens ein Verteilersystem umfasst, das das Arbeitsstoff-Lösungsmittel-Gemisch (A1) auf den Füllkörper (20) oder den Rohrbündelapparat (130) gibt.

6. Absorptionsanlage (100) gemäß einem der Ansprüche 1 bis 5, **dadurch gekennzeichnet, dass** der im Desorber (10) integrierte Kondensator (14) oberhalb eines Fangbodens (28) angeordnet ist.

7. Absorptionsanlage (100) gemäß einem der Ansprüche 1 bis 6, **dadurch gekennzeichnet, dass** der Absorber (40) als Rohrbündelapparat mit einem Bündel senkrecht angeordneter Rohre ausgestaltet ist.

8. Absorptionsanlage (100) gemäß einem der Ansprüche 1 bis 7, **dadurch gekennzeichnet, dass** der Absorber (40) in einem Kopfbereich (44) ein Verteilersystem umfasst, das das flüssige arbeitsstoffarme Lösungsmittel (A12) aus dem Desorber (10) auf dem Rohrbündel verteilt.

9. Absorptionsanlage (100) gemäß einem der Ansprüche 1 bis 8, **dadurch gekennzeichnet, dass** der Absorber (40) ein weiteres Verteilersystem umfasst, das den verdampften lösungsmittelarmen Arbeitsstoff (A8) aus dem Verdampfer (110, 120) in einem Sumpfbereich (46) des Absorbers (40) auf das Rohrbündel aufgibt.

10. Absorptionsanlage (100) gemäß einem der Ansprüche 1 bis 9, **dadurch gekennzeichnet, dass** dem Desorber (10) und/oder dem Absorber (40) mindestens ein Econimiser (26, 50) zugeordnet ist, in dem ein zulaufender Strom (A1, A12) gegen einen ablaufenden Strom (A9, A12) geheizt oder gekühlt wird.

11. Absorptionsanlage (100) gemäß einem der Ansprüche 1 bis 10, **dadurch gekennzeichnet, dass** der Verdampfer (120) zum Verdampfen des flüssigen lösungsmittelarmen Arbeitsstoffes (A8) als separater Apparat ausgestaltet ist oder im Absorber (40) integriert ist.

12. Absorptionsanlage (100) gemäß einem der Ansprüche 1 bis 11, **dadurch gekennzeichnet, dass** dem Absorber (40), der bei einem Druck p₁ betrieben wird, mindestens ein weiterer Absorber (200) nachgeschaltet ist, der bei einem Druck p₂ > p₁ betrieben wird.

13. Verwendung der Absorptionsanlage (100) gemäß einem der Ansprüche 1 bis 12 zum Transformieren von Niedertemperaturwärme.

14. Verfahren zum Kühlen oder Heizen eines Trägermediums in einer Absorptionsanlage (100) gemäß einem der Ansprüche 1 bis 12, wobei ein flüssiges Arbeitsstoff-Lösungsmittel-Gemisch (A1) in einen flüssigen lösungsmittelarmen Arbeitsstoff (A6, A7) und ein flüssiges arbeitsstoffarmes Lösungsmittel (A9) durch mindestens einen Desorber (10) getrennt wird, der flüssige lösungsmittelarme Arbeitsstoff (A8) durch mindestens einen Verdampfer (110, 120) verdampft wird, und der verdampfte lösungsmittelarme Arbeitsstoff (A13) durch das vom Desorber (10) bereitgestellte flüssige arbeitsstoffarme Lösungsmittel (A12) in mindestens einem Absorber (40) absorbiert wird, **dadurch gekennzeichnet, dass** ein oder mehrere der folgenden Merkmale erfüllt sind:
(aa) das Trennen des flüssigen Arbeitsstoff-Lösungsmittel-Gemisches (A1) erfolgt in einem Desorber (10), in dem mindestens ein wärmeeintragendes System (12, 130) zum Austreiben des flüssigen lösungsmittelarmen Arbeitsstoffs (A8) integriert ist,
(bb) das Trennen des flüssigen Arbeitsstoff-Lösungsmittel-Gemisches (A1) erfolgt in einem Desorber (10), in dem mindestens ein Kondensator (14) zum Kondensieren des lösungsmittelarmen Arbeitsstoffs (A5) integriert ist,
(cc) das Absorbieren des verdampften lösungsmittelarmen Arbeitsstoffes (A13) erfolgt in einem als Fallfilmapparat ausgestalteten Absorber (40).
